# FASCICULE DE BREVET EUROPEEN

(11) **EP 3 281 839 B1**
(45) Date de publication et mention de la délivrance du brevet: **17.06.2020**
(21) Numéro de dépôt: 17184655.3
(22) Date de dépôt: 03.08.2017
(51) Int. Cl.: B61L 3/12, B61L 25/02, G06K 7/00, G06K 19/07

(54) **PROCÉDÉ DE LOCALISATION D'UN VÉHICULE FERROVIAIRE**
LOKALISIERUNGSVERFAHREN EINES SCHIENENFAHRZEUGS
METHOD FOR LOCATING A RAILWAY VEHICLE

(30) Priorité: 04.08.2016 FR 1657564
(43) Date de publication de la demande: 14.02.2018
(73) Titulaire: ALSTOM Transport Technologies, 93400 Saint-Ouen (FR)
(72) Inventeur: AH-TIANE, Brice, 93500 Pantin (FR); BERTHION, Fabien, 75014 Paris (FR); LEGRAND, Alain, 92200 Neuilly s/Seine (FR)
(74) Mandataire: Lavoix

(56) Documents cités:
- KR-A- 20100 073 799
- US-A1- 2014 263 862
- US-A1- 2015 060 608
- US-B1- 8 150 568

## Description

La présente invention concerne un procédé de localisation d'un véhicule ferroviaire.

Les véhicules ferroviaires sont généralement équipés de systèmes de localisation ou de géolocalisation permettant de connaître leurs positions sur un réseau ferroviaire. Cela permet notamment de contrôler la signalisation de manière à éviter les accidents entre véhicules ferroviaires.

US 2015/060608 A1, US 2014/263862 A1, KR 2010 0073799 A et US 8 150 568 B1 décrivent des exemples de procédé de localisation d'un véhicule ferroviaire dans un réseau ferroviaire à l'aide de la technologie RFID (« radio frequency identification »).

Un procédé de localisation actuel repose sur un système de balises et d'odométrie. Des balises sont fixées au sol sur le réseau ferroviaire et une antenne est embarquée dans le véhicule ferroviaire. L'antenne capte des signaux électromagnétiques émis par les balises, permettant ainsi de localiser le véhicule ferroviaire sur le réseau ferroviaire. Entre les balises, la position du train sur le réseau est suivie par odométrie.

Cependant, un tel système est susceptible de connaître des défaillances, par exemple en cas de panne du système de localisation, par exemple, de l'antenne ou dans la communication entre le train et les équipements au sol. Il est donc typiquement prévu un système de localisation secondaire, indépendant dudit système de balises, apte à prendre le relais lorsque le système de localisation principal est défaillant ou à fonctionner en parallèle.

Un tel système de localisation secondaire est, par exemple, formé par des compteurs d'essieux agencés sur la voie. Un compteur d'essieux est un dispositif apte à détecter la présence d'un véhicule ferroviaire en circulation sur une zone, par comptage des essieux franchissant les détecteurs encadrant cette zone. Un véhicule ferroviaire est détecté dans la zone d'un compteur d'essieux, tant que le compteur d'essieux suivant n'aura pas comptabilisé le même nombre d'essieux que le dernier compteur d'essieux ayant détecté le véhicule ferroviaire.

Cependant, cela n'est, par exemple, pas adapté aux véhicules ferroviaires ne possédant pas d'essieu, comme les monorails, ni aux trains sur pneus tels les véhicules automatiques légers (ou VAL).

L'invention a notamment pour but de remédier à cet inconvénient en proposant un procédé alternatif de localisation sûre d'un véhicule ferroviaire. On entend ici par « sûre » une localisation de niveau SIL4 (de l'anglais « Safety Integrity Level 4 ») découlant de la norme CENELEC 50129.

A cet effet, l'invention a notamment pour objet un procédé de localisation d'un véhicule ferroviaire dans un réseau ferroviaire dans lequel le véhicule ferroviaire circule, comprenant les étapes selon la revendication 1.

Le véhicule ferroviaire, en déplacement sur le réseau, est détecté régulièrement lors de son passage au niveau de premiers dispositifs. La position du véhicule ferroviaire est donc connue et dépend uniquement de la répartition des premiers dispositifs sur le réseau.

Un procédé de localisation selon l'invention peut comporter en outre l'une ou plusieurs des caractéristiques suivantes, prises seules ou selon toutes les combinaisons techniquement possibles :
- la position du véhicule ferroviaire est l'emplacement où la détection est effectuée ;
- au moins deux seconds dispositifs sont fournis sur le véhicule ferroviaire ;
- chaque second dispositif est placé sous le véhicule ferroviaire ;
- chaque premier dispositif est placé entre deux rails formant ensemble une voie du réseau ferroviaire ;
- chaque premier dispositif est placé à mi-distance entre les deux rails, et
- les premiers dispositifs sont reliés à un système de signalisation, plus particulièrement via une liaison Ethernet.

L'invention sera mieux comprise à la lecture de la description qui va suivre, donnée uniquement à titre d'exemple et faite en se référant aux figures annexées parmi lesquelles :
- la figure 1 est une vue schématique selon une direction longitudinale d'un véhicule ferroviaire sur un réseau ferroviaire, et
- la figure 2 est une vue schématique de véhicules ferroviaires sur un réseau ferroviaire.

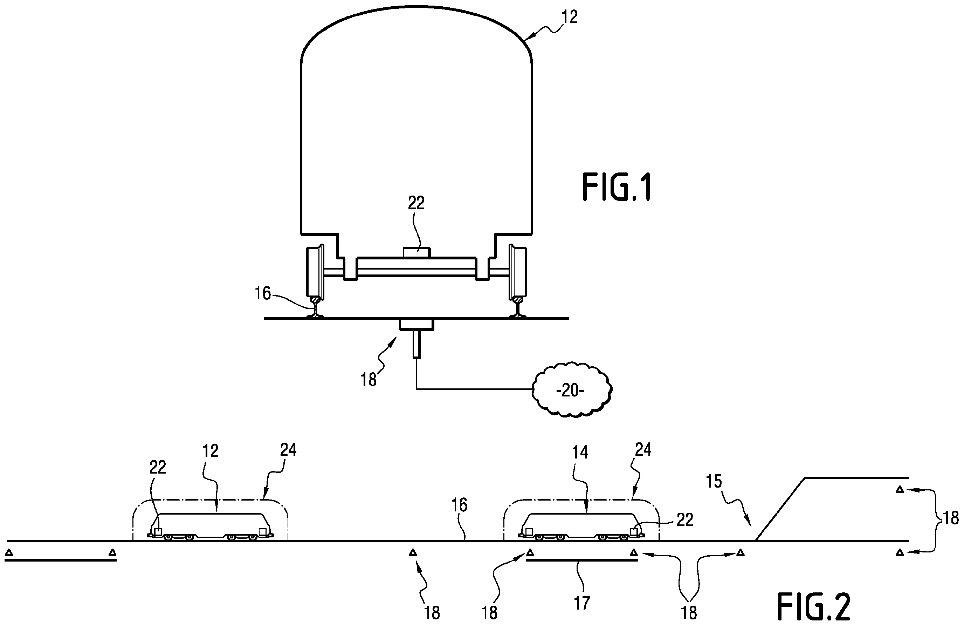

Un premier véhicule ferroviaire 12 est représenté sur un réseau ferroviaire sur les figures 1 et 2. Un second véhicule ferroviaire 14 est visible sur le réseau ferroviaire sur la figure 2.

Le réseau ferroviaire comprend des voies 16.

Les voies 16 se croisent à des nœuds 15, par exemple, à des aiguillages, de sorte qu'un véhicule ferroviaire est apte à circuler sur le réseau.

Chaque voie 16 du réseau ferroviaire est ici formée par deux rails. Les rails sont séparés d'une distance sensiblement constante, les rails étant droits ou courbes.

Chaque voie 16 s'étend localement selon une direction principale appelée « direction longitudinale », selon laquelle circule un véhicule ferroviaire placé sur cette voie.

Le réseau comprend en outre des stations 17, correspondant, par exemple, à des quais.

Une pluralité de premiers dispositifs 18 est répartie sur le réseau.

Chaque premier dispositif 18 est placé entre deux rails formant une voie 16. Chaque premier dispositif 18 est plus particulièrement placé à mi-distance entre les deux rails correspondants.

A chaque station 17, un premier dispositif 18 est, par exemple, fourni à chaque extrémité de la station selon la direction longitudinale.

A chaque nœud 15, un premier dispositif 18 est, par exemple, fourni au niveau de chaque voie 16 s'étendant depuis le nœud 15 de part et d'autre du nœud 15.

Selon un premier mode de réalisation, les premiers dispositifs 18 sont des lecteurs de radio-identification ou RFID de l'anglais « *radio frequency identification ».*

Chaque premier dispositif 18 est relié à un réseau de communication 20, plus particulièrement via une liaison Ethernet, le réseau 20 servant, par exemple, à la mise en œuvre de la signalisation.

Chaque véhicule ferroviaire 12, 14 est pourvu d'au moins un second dispositif 22, plus particulièrement d'au moins deux seconds dispositifs, par exemple, d'au moins un second dispositif à chaque extrémité du véhicule ferroviaire.

Le second dispositif 22 est une étiquette RFID.

L'étiquette RFID présente une mémoire dans laquelle est compris un identifiant. L'identifiant permet notamment d'identifier le véhicule ferroviaire sur lequel est fixé l'étiquette, et éventuellement l'emplacement de l'étiquette RFID sur le véhicule ferroviaire 12, 14.

Le second dispositif 22 est placé sous le véhicule ferroviaire, de sorte que le second dispositif 22 fait face à la voie 16 sur laquelle circule le véhicule ferroviaire, comme cela est représenté sur la figure 1.

Un procédé de localisation d'un véhicule ferroviaire dans un réseau ferroviaire dans lequel le véhicule ferroviaire circule va maintenant être décrit.

Le procédé comprend les étapes suivantes :
- fourniture d'une pluralité de premiers dispositifs 18 sur le réseau ferroviaire tel que décrit précédemment,
- fourniture d'au moins un second dispositif 22 sur le véhicule ferroviaire 12, 14 tel que décrit précédemment,
- circulation du véhicule ferroviaire 12, 14 sur le réseau,
- détection d'une étiquette RFID par un lecteur RFID, et
- détermination de la position du véhicule ferroviaire 12, 14, en fonction de la détection.

Au cours de l'étape de détection, au moins une étiquette RFID du second dispositif 22 est détectée par un lecteur RFID des premiers dispositifs 18.

Le lecteur RFID est apte à lire l'identifiant de l'étiquette RFID, de manière à identifier l'étiquette RFID et le véhicule ferroviaire 12, 14 correspondant.

Le lecteur RFID ne lit pas les étiquettes RFID à une distance supérieure à une distance de sécurité, par exemple, sensiblement égale à 10 mètres.

La distance de sécurité est une distance pour laquelle le niveau de réception du signal de l'étiquette RFID par le lecteur RFID est sensiblement égale au niveau de réception d'un bruit thermique dû au véhicule ferroviaire 12, 14. Cela permet notamment d'écarter tout signal ne pouvant être reçu et/ou traité.

Une étiquette RFID est, par exemple, détectée par un lecteur RFID lorsque l'étiquette se trouve à moins d'une distance donnée du lecteur, la distance donnée étant strictement inférieure à la distance de sécurité et, par exemple, sensiblement égale à 40 centimètres.

La distance donnée est préalablement calculée en fonction d'une pluralité de paramètres, par exemple, le profil de la voie, le profil du dessous de caisses du véhicule ferroviaire, le matériau utilisé pour la voie et/ou le train, la capacité de lecture du lecteur RFID et/ou les conditions météorologiques.

Pour chaque véhicule ferroviaire 12, 14, une zone de détection 24 est définie comme la zone dans laquelle au moins un des seconds dispositifs 22 placés sur le véhicule ferroviaire est apte à être détecté.

Chaque zone de détection 24 est ici continue pour un véhicule ferroviaire 12, 14. Ainsi lorsqu'un véhicule ferroviaire passe au niveau d'un premier dispositif 18, les seconds dispositifs 22 sont détectés par le premier dispositif 18 à la suite continûment, et éventuellement, avec des recoupements entre les seconds dispositifs.

Les seconds dispositifs 22 sur un même véhicule ferroviaire sont, par exemple, espacés d'une distance inférieure à 20 m, plus particulièrement la distance entre deux seconds dispositifs est comprise entre 3 m et 15 m, plus particulièrement sensiblement égale à 8 mètres.

Puis, au cours de l'étape de détermination, la position du véhicule ferroviaire 12, 14 dans le réseau est déterminée.

La position du véhicule ferroviaire 12, 14 est l'emplacement où la détection est effectuée, c'est-à-dire ici l'emplacement du lecteur RFID ayant détecté l'étiquette RFID.

Par exemple, lorsque le véhicule ferroviaire 12, 14 comprend une pluralité de seconds dispositifs 22, l'ensemble des seconds dispositifs 22 du véhicule ferroviaire 12, 14 doit être détecté par un premier dispositif 18 pour considérer que l'emplacement du premier dispositif 18 correspond à la position du véhicule ferroviaire 12, 14.

En outre, à chaque nœud 15, le procédé de localisation permet notamment de connaître la voie 16 sur laquelle s'engage le véhicule ferroviaire.

Selon un deuxième mode de réalisation, les premiers dispositifs 18 sont des étiquettes RFID et chaque second dispositif est un lecteur RFID. Chaque étiquette RFID présente une mémoire comprenant un identifiant permettant de connaître l'emplacement de l'étiquette.

Le procédé est similaire à celui décrit précédemment, un lecteur RFID du second dispositif 22 détectant au moins une étiquette RFID des premiers dispositifs 18.

La position du véhicule ferroviaire est l'emplacement où la détection est effectuée, c'est-à-dire ici l'emplacement de l'étiquette RFID détectée.

Ce procédé de localisation offre une alternative aux procédés de localisation actuels.

Plus particulièrement, il permet de réaliser la détermination d'une localisation secondaire du véhicule ferroviaire, ce véhicule ferroviaire comprenant par ailleurs un système de localisation principale indépendant, permettant de réaliser la détermination d'une localisation principale du véhicule.

Cette détermination de la localisation principale est réalisée de manière classique, à l'aide de balises placées le long de la voie et d'une antenne placée sur le véhicule ferroviaire, et d'un système d'odométrie.

La localisation secondaire remplace la localisation principale lorsque le véhicule ferroviaire fonctionne dans un mode de fonctionnement dégradé, dans lequel la détermination de la localisation principale ne fonctionne plus, par exemple, en l'absence de relais.

La localisation de chaque véhicule ferroviaire sur un réseau ferroviaire permet notamment de gérer la circulation des véhicules ferroviaires sur le réseau, de manière à éviter un accident entre deux véhicules ferroviaires.

Par exemple, on définit autour de l'emplacement de chaque véhicule ferroviaire, une zone protégée dans laquelle aucun autre véhicule ferroviaire n'est autorisé à circuler.

La zone protégée correspond, par exemple, à un intervalle comprenant la dernière position déterminée du véhicule ferroviaire sur le réseau.

L'intervalle est, par exemple, plus étendu par rapport à ladite position dans le sens dans lequel le véhicule ferroviaire se déplace.

Lorsqu'un véhicule ferroviaire est détecté au niveau d'un nouveau second dispositif, la position du véhicule ferroviaire est déterminée et mise à jour, de sorte que la zone protégée est décalée autour de la nouvelle position déterminée du véhicule ferroviaire.

La fiabilité de la localisation de chaque véhicule ferroviaire permet donc de réduire les risques d'accidents ferroviaires.

## Revendications

1. Procédé de localisation d'un véhicule ferroviaire (12, 14) dans un réseau ferroviaire dans lequel le véhicule ferroviaire circule, le procédé comprenant les étapes suivantes :
- la détermination d'une localisation principale du véhicule à l'aide de balises placées le long de la voie et d'une antenne placée sur le véhicule ferroviaire, et d'un système d'odométrie :
- la détermination d'une localisation secondaire, indépendante de la localisation principale, et comprenant les étapes suivantes :
- fourniture d'une pluralité de premiers dispositifs (18), les premiers dispositifs étant des étiquettes RFID ou des lecteurs RFID, les premiers dispositifs étant répartis sur le réseau,
- fourniture d'au moins un second dispositif (22) sur le véhicule ferroviaire (12, 14), le second dispositif (22) étant un lecteur RFID, les premiers dispositifs (18) étant alors des étiquettes RFID, ou une étiquette RFID, les premiers dispositifs (18) étant alors des lecteurs RFID,
- circulation du véhicule ferroviaire (12, 14) sur le réseau,
- détection d'au moins une étiquette RFID parmi les premiers et le second dispositif (18, 22) par un lecteur RFID correspondant parmi les premiers et le second dispositif (18, 22), et
- détermination de la position du véhicule ferroviaire (12, 14) dans le réseau en fonction de la détection d'étiquette RFID,
la détection de l'étiquette RFID étant effectuée lorsque cette étiquette RFID est espacée du lecteur RFID d'une distance inférieure à une distance donnée, la distance donnée étant inférieure à une distance maximale pour laquelle un niveau de réception d'un signal émis par l'étiquette RFID et détecté par le lecteur RFID est sensiblement égal au niveau de réception d'un bruit thermique dû au véhicule ferroviaire,
la localisation secondaire étant propre à remplacer la localisation principale lorsque le véhicule ferroviaire fonctionne dans un mode de fonctionnement dégradé, dans lequel la détermination de la localisation principale ne fonctionne plus.

2. Procédé selon la revendication 1, **caractérisé en ce que** la position du véhicule ferroviaire (12, 14) est l'emplacement où la détection est effectuée.

3. Procédé selon la revendication 1 ou 2, **caractérisé en ce qu'**au moins deux seconds dispositifs (22) sont fournis sur le véhicule ferroviaire (12, 14).

4. Procédé selon l'une quelconque des revendications 1 à 3, **caractérisé en ce que** chaque second dispositif (22) est placé sous le véhicule ferroviaire (12, 14).

5. Procédé selon l'une quelconque des revendications 1 à 4, **caractérisé en ce que** chaque premier dispositif (18) est placé entre deux rails formant ensemble une voie (16) du réseau ferroviaire.

6. Procédé selon la revendication 5, **caractérisé en ce que** chaque premier dispositif (18) est placé à mi-distance entre les deux rails.

7. Procédé selon l'une quelconque des revendications 1 à 6, **caractérisé en ce que** les premiers dispositifs (18) sont reliés à un système de signalisation, plus particulièrement via une liaison Ethernet.

## Patentansprüche

1. Verfahren zum Lokalisieren eines Schienenfahrzeug (12, 14) in einem Schienennetz, auf dem das Schienenfahrzeug fährt, wobei das Verfahren die folgenden Schritte umfasst:
- Bestimmen einer Hauptlokalisierung des Fahrzeugs mithilfe von Baken, die entlang des Schienenweges platziert sind, und einer Antenne, die an dem Schienenfahrzeug platziert ist, und eines oder Odometriesystems:
- Bestimmen einer Sekundärlokalisierung, unabhängig von der Hauptlokalisierung, die die folgenden Schritte umfasst:
- Bereitstellen einer Mehrzahl von ersten Vorrichtungen (18), wobei die ersten Vorrichtungen RFID Transponder oder RFID Leser sind, wobei die ersten Vorrichtungen auf dem Netz verteilt sind,
- Bereitstellen mindestens einer zweiten Vorrichtung (22) an dem Schienenfahrzeug (12, 14), wobei die zweite Vorrichtung (22) ein RFID Leser ist, wenn die ersten Vorrichtungen (18) RFID Transponder sind, oder ein RFID Transponder ist, wenn die ersten Vorrichtungen (18) RFID Leser sind,
- Fahren des Schienenfahrzeug (12, 14) auf dem Netz,
- Detektieren mindestens eines RFID Transponders von den ersten Vorrichtungen (18) und der zweiten Vorrichtung (22) durch einen entsprechenden RFID Leser von den ersten Vorrichtungen (18) und der zweiten Vorrichtung (22) und
- Bestimmen der Position des Schienenfahrzeugs (12, 14) in dem Netz abhängig von der Detektion des RFID Transponders,
wobei das Detektieren des RFID Transponders ausgeführt wird, wenn dieser RFID Transponder von dem RFID Leser um eine Entfernung kleiner als eine gegebene Entfernung beabstandet ist, wobei die gegebene Entfernung kleiner als eine maximale Entfernung ist, für die ein Empfangsniveau eines von dem RFID Transponder gesendeten Signals und von dem RFID Leser detektierten Signals im Wesentlichen gleich dem Empfangsniveau eines thermischen Rauschens aufgrund des Schienenfahrzeugs ist,
wobei die Sekundärlokalisierung geeignet ist, die Hauptlokalisierung zu ersetzen, wenn das Schienenfahrzeug in einem verschlechterten Betriebsmodus arbeitet, bei dem die Bestimmung der Hauptlokalisierung nicht mehr funktioniert.

2. Verfahren nach Anspruch 1, **dadurch gekennzeichnet, dass** die Position des Schienenfahrzeugs (12, 14) die Stelle ist, an der die Detektion durchgeführt wird.

3. Verfahren nach Anspruch 1 oder 2, **dadurch gekennzeichnet, dass** mindestens zwei zweite Vorrichtungen (22) an dem Schienenfahrzeug (12, 14) vorgesehen sind.

4. Verfahren nach einem beliebigen der Ansprüche 1 bis 3, **dadurch gekennzeichnet, dass** jede zweite Vorrichtung (22) unter dem Schienenfahrzeug (12, 14) angeordnet ist.

5. Verfahren nach einem beliebigen der Ansprüche 1 bis 4, **dadurch gekennzeichnet, dass** jede erste Vorrichtung (18) zwischen zwei Schienen angeordnet ist, die zusammen einen Schienenweg (16) des Schienennetzes bilden.

6. Verfahren nach Anspruch 5, **dadurch gekennzeichnet, dass** jede erste Vorrichtung (18) in der Mitte zwischen den zwei Schienen angeordnet ist.

7. Verfahren nach einem beliebigen der Ansprüche 1 bis 6, **dadurch gekennzeichnet, dass** die ersten Vorrichtungen (18) an ein Signalisierungssystem, insbesondere über eine Ethernet Verbindung, angeschlossen sind.

## Claims

1. A method for locating a railway vehicle (12, 14) on a railway system on which the railway vehicle is traveling, the method comprising the following steps:
- determining a primary location of the vehicle by means of beacons placed along the track and an antenna placed on the railway vehicle and an odometry system,
- determining a secondary location independent from the primary location, and comprising the following steps:
- providing a plurality of first devices (18), the first devices being RFID tags or RFID readers, the first devices being distributed over the system,
- providing at least one second device (22) on the railway vehicle (12, 14), the second device (22) being an RFID reader, the first devices (18) then being RFID tags, or an RFID tag, the first devices (18) then being RFID readers,
- travel of the railway vehicle (12, 14) over the system,
- detecting at least one RFID tag from among the first and second device (18, 22) via a corresponding RFID reader from among the first and second device (18, 22), and
- determining the position of the railway vehicle (12, 14) within the system based on the RFID tag detection,
the detection of the RFID tag is done when this RFID tag is spaced from the RFID reader by a distance smaller than a given distance, the given distance being smaller than a maximum distance for which a reception level of a signal emitted by the RFID tag and detected by the RFID reader is substantially equal to the reception level of a thermal noise due to the railway vehicle,
the second location being adapted to replace the primary location when the railway vehicle is operating in a downgraded operating mode in which the determination of the primary location no longer works.

2. The method according to claim 1, **characterized in that** the position of the railway vehicle (12, 14) is the location where the detection is done.

3. The method according to claim 1 or 2, **characterized in that** at least two second devices (22) are provided on the railway vehicle (12, 14).

4. The method according to any one of claims 1 to 3, **characterized in that** each second device (22) is placed under the railway vehicle (12, 14).

5. The method according to any one of claims 1 to 4, **characterized in that** each first device (18) is placed between two rails together forming a track (16) of the railway system.

6. The method according to claim 5, **characterized in that** each first device (18) is placed midway between the two rails.

7. The method according to any one of claims 1 to 6, **characterized in that** the first devices (18) are connected to a signaling system, in particular via an Ethernet link.
